# EUROPEAN PATENT APPLICATION

(11) **EP 2 916 230 A1**
(43) Date of publication of application: **09.09.2015**
(21) Application number: 13750838.8
(22) Date of filing: 11.03.2013
(51) Int. Cl.: G06F 12/00, G06F 3/06

(54) **STORAGE DEVICE AND DATA BACKUP METHOD**

(30) Priority: 30.10.2012 JP 2012239488
(71) Applicant: Kabushiki Kaisha Toshiba, Minato-ku, Tokyo 105-8001 (JP)
(72) Inventor: MURATA, Akifumi, Minato-ku, Tokyo 1058001 (JP)
(74) Representative: Henkel, Breuer & Partner
(86) International application number: PCT/JP2013/056682
(87) International publication number: WO 2014/069007

(57) **Abstract**

According to an embodiment, a storage device is applied to a distributed database. The storage device includes a communication module and a backup module. The a backup module is configured to make backup of partitioning information and data stored for the distributed database in the storage device, when the communication module receives a command to make a backup of the distributed data base. The partitioning information indicates locations of partitions created by separating a storage area of the distributed database.

## Description

### Technical Field

Embodiments described herein relate generally to a data backup technique suitable for, e.g., a distributed database.

### Background Art

Various storage systems have been developed as ones for storing a large amount of data and processing writing/reading of data at a high speed. It is very important for such a kind storage system to back up data in order to secure the data.

### Citation List

### Patent Literature

Patent document 1: Jpn. Pat. Appln. KOKAI Publication No. 2004-13367

### Summary of Invention

### Technical Problem

A distributed database is a storage system in which data is distributed to a plurality of nodes to improve the parallelism, as a result of which the function of writing/reading data is also improved. In general, a host machine which gives a request for writing/reading data to/from a distributed database does not recognize nodes forming the distributed database. In the following explanation, a machine which gives a request for writing/reading data to/from the distributed database is referred to as a host machine; that is, the host machine is not a machine which manages the distributed database.

Suppose a given host machine backs up data in the distributed database. In this case, the host machine gives a large number of requests for data reading to the distributed database, and nodes in the distributed database execute data reading processing all at once. Consequently, a data channel between the host machine and the distributed database, i.e., between the host machine and a plurality of nodes (connected in parallel), becomes bottleneck. This restricts the performance of the distributed database at the time of backing up data.

### Solution to Problem

According to an embodiment, a storage device is applied to a distributed database. The storage device includes a communication module and a backup module. The a backup module is configured to make backup of partitioning information and data stored for the distributed database in the storage device, when the communication module receives a command to make a backup of the distributed data base. The partitioning information indicates locations of partitions created by separating a storage area of the distributed database.

### Brief Description of Drawings

FIG. 1 is a view for showing an example of a construction of a distribute database to which storage devices according to an embodiment are applied as node.
FIG. 2 is a view for explaining a basic principle of data backup processing in the distributed database to which the storage devices according to the embodiment are applied as nodes.
FIG. 3 is a view for explaining a mechanism for preventing lowering of a performance due to the backup processing, in each of the storage devices according to the embodiment.
FIG. 4 is a flowchart showing a procedure of the backup processing in the distributed database to which the storage devices according to the embodiment are applied as nodes.
FIG. 5 is a flowchart showing a procedure of data writing/reading in the distributed database to which the storage devices according to the embodiment are applied as nodes.

### Description of Embodiments

Various embodiments will be described hereinafter with reference to the accompanying drawings.

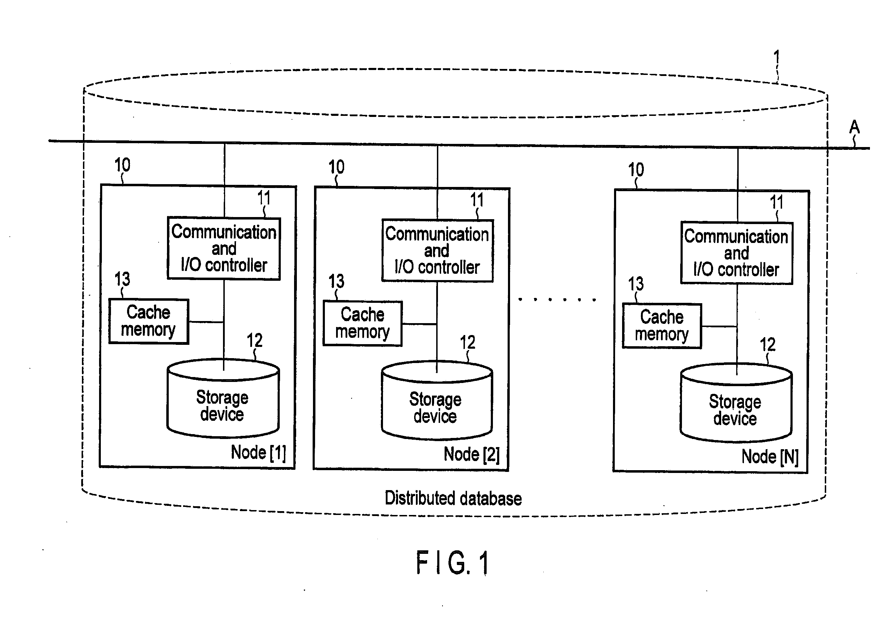

FIG. 1 is a view showing an example of a construction of a distributed database 1 to which storages devices according to an embodiment are applied as nodes 10. As shown in FIG. 1, the distributed database 1 includes a plurality of nodes 10 connected to a data channel A. It should be noted that as a method for constructing the distributed database 1, various methods can be adopted. For example, in a method (a), one of the plurality of nodes 10 is applied as a master, and controls the entire distributed database 1; in a method (b), the plurality of nodes 10 equally and independently operate according to a predetermined rule as elements of the distributed database; and in a method (c), a host node which controls the entire distributed database 1 is provided separate from the plurality of nodes 10. A data backup system which will be described later is, however, not limited to any of the above methods.

Suppose a host machine makes a request for reading data from the distributed database 1 thereto. In the above method (a), the request made by the host machine is received by the node 10 serving as the master, it is determined which of the nodes 10 holds the above requested data, and (if the node 10 serving as the master does not hold the data) the request is sent to the node 10 determined to hold the data. In the method (b), each of the nodes 10 receives the request made by the host machine, said each node 10 determines whether data held by said each node 10 corresponds to the requested data or not, and of all the nodes 10, the node 10 which determines that the data which it holds corresponds to the requested data reads the data. In the method (c), the request made by the host machine is received by the host node, it is determined which of the nodes 10 holds the requested data, and the request is sent to the node 10 determined to hold the data.

As shown in FIG. 1, the nodes 10 each include a communication and I/O controller 11, a storage device 12 and a cache memory 13. The communication and I/O controller 11 of each node 10 is a device for controlling said each node 10, and includes a function of executing communication with the other nodes 10 as a first function.

Each node 10 holds status information and partitioning information on the entire distributed database 1, and synchronizes those information in the distributed database 1 with a communication function of its communication and I/O controller 11. The partitioning information is information indicating in which of the nodes 10 each of divided areas (partitions) of a storage area of the entire distributed database 1 is present.

The communication and I/O controller 11 includes a function of controlling inputting and outputting of data to and from the storage device 12 and the cache memory 13 as a second function.

To be more specific, the communication and I/O controller 11 executes writing/reading of data to/from the storage device 12, while using the cache memory 13 as a cache. With respect to data writing, the communication and I/O controller 11 can execute both write-back processing in which it gives a reply indicating that writing is completed, at the point in time when data is written to the cache memory 13 and write-through processing in which it gives a reply indicating that writing is completed, at the point in time when data is written to the storage device 12. Furthermore, the communication and I/O controller 11 includes a specific mode in which it executes data writing/reading on the storage device 12 without changing the contents of data in the cache memory 13. In order to execute data writing/reading on the storage device 12 without changing the contents of the data in the cache memory 13, a plurality of methods can be adopted. For example, in a method (a), the cache memory 13 is not used, and in a method (b), in the case where data to be read is present in the cache memory 13, the cache memory 13 is used only when the data is read from the cache memory 13.

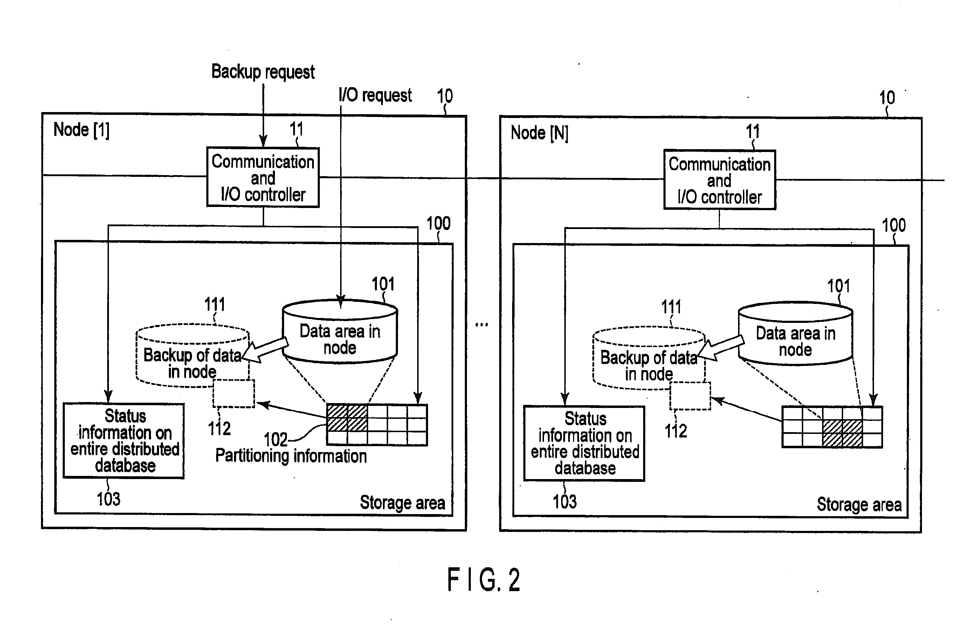

Next, a basic principle of data backup processing in the distributed database 1 to which the storage devices according to the embodiments are applied as the nodes 10 will be explained with reference to FIG 2.

Referring to FIG. 2, storage areas 100 are storage areas of the nodes 10, each of which includes the storage device 12 and the cache memory 13. In the storage area 100 of each node 10, a data area 101 is allocated for the distributed database 1, and holds the partitioning information 102 and status information 103. The communication and I/O controller 11 accesses the data area 101 in response to a request for writing/reading data (I/O request), which is issued by the host machine, based on the partitioning information 102.

Suppose a given host machine issues a request (backup request) for backing up data in the distributed database 1. For example, in the case where any of the nodes 10 serves as the master, and controls the entire distributed database 1, after received by the node 10 serving as the master, the above backup request is sent to the other nodes 10 in the distributed database 1 by the communication function of the communication and I/O controller 11.

When each of the nodes 10 receives the backup request, the communication and I/O controller 11 of said each node 10 updates the status information 103 to change the status indicated thereby from an operation status to a backing-up status. During the data backup processing, in the case where the distributed database 1 receives a request for data writing/reading (from, e.g., a host machine other than the above host machine issuing the backup request), if the request is a request for data reading, the distributed database 1 immediately executes data reading, and if the request is a request for data writing, the distributed database 1 execute data writing after the backup processing is completed.

When the status information 103 is updated the backing-up status, the communication and I/O controller 11 creates a backup (indicated by reference numeral 111 in FIG. 2) of data in the data area 101 in the storage area 100 of the node 10 based on the partitioning information 102. Also, the communication and I/O controller 11 makes a backup (indicated by reference numeral 112 in FIG. 2) of the partitioning information 102 in the storage area 100 of the node 10. When producing the backup of the data of the data area 101, the communication and I/O controller 11 may perform data compression. The backup (111) of the data in the data area 101 and the backup (112) of the partitioning information 102 are stored in a backup file in the node 10.

As described above, the communication and I/O controller 11 of each node 10 includes a function of communicating with the other nodes 10. With this communication function, after confirming that data in all the nodes 10 in the distributed database 1 is completely backed up, the communication and I/O controller 11 adds status information indicating that the backup processing is completed to a backup file. Then, after confirming that the status information indicating that the data in all the nodes 10 in the distributed database 1 is completely backed up is added to the backup file, the communication and I/O controller 11 updates the status information 103 to change the status indicated thereby from the backing-up status to the operation status. When the status information indicating the completion of the backup processing is added, it can be determined that the backup file is an available file.

That is, in the distributed database 1 to which the storage devices according to the embodiment are applied as the nodes 10, each of the nodes 10 makes backups of the partitioning information 102 and data in the data area 101 for the distributed database 1 in the storage area 100 in said each node 10, as a result of which a backup of the data in the entire distributed database is made. Therefore, it is not necessary to transmit a backup using the data channel A, and thus the data channel A does not become bottleneck. Accordingly, the data in the distributed database 1 can be backed up at a higher speed. It should be noted that the communication and I/O controller 11 includes a function of restoring, with the backup, the data of the node 10 to that of the node 10 at the time of backing up the data of the node 10.

Suppose a given host machine issues a request for restoring the data of the distributed database 1 with the backup. For example, in the case where any of the nodes 10 serves as the master, and controls the entire distributed database 1, after being received by the node 10 serving as the master, the above request is sent to the other nodes 10 by the communication function of the communication and I/O controller 11.

When each of the nodes 10 receives the request, the communication and I/O controller 11 of said each node 10 updates the status information 103 to change the status indicated thereby from the operation status to a maintenance state. In the maintenance state, the entire distributed database 1 checks integrity of the backup file (to be managed by said each node 10). To be more specific, it is checked, e.g., whether status information indicating completion of backup processing is added to the backup file of said each node 10 or not, and whether all the nodes 10 indicated in the partitioning information 102 are present or not.

If it is determined that integrity of the backup file is ensured, the communication and I/O controller 11 of each node 10 updates the status indicated by the status information 103 to a restoring status, and starts to read data from the backup file. Then, when data is completely read from the backup files in all the nodes 10 in the distributed database 1, i.e., data restoring processing is completed, the communication and I/O controller 11 of each node 10 updates the status information 103 from the status indicated thereby to the operation status, and the node 10 serving as the master starts to accept a request for accessing it for data, which is issued by the host machine.

Also, it is possible that the backups made by the nodes 10 are set as temporary backups, and successively read out, and then stored as accepted backups by, e.g., a magnetic tape. The restoring function of the communication and I/O controller 11 can also restore data of the node 10 with a backup externally input, such as backup data held by a magnetic tape.

Furthermore, in the case where a request for writing data is received during data backup processing, processing for writing the data may be executed in response to the request at the point in time when the data in all the nodes 10 in the distributed database 1 is completely backed up. Also, it may be set that even before completion of the backup processing of the data in all the nodes 10 in the distributed database 1, any of the nodes 10, whose data is completely backed up, is subjected to the data writing processing.

Also, it should be noted that in general, of data written to the storage device 12 and that read from the storage device 12, written or read data associated with a newest request is stored in the cache memory 13 used as a cache for the storage device 12 in preference to data associated with other requests. That is, the newer the request, the higher the priority of data to be stored in the cache memory 13. To be more specific, the communication and I/O controller 11 manages the cache memory 13 to replace data associated with the oldest one of requests with data associated with the newest request (cache out).

However, in the above general case, after production of a backup in the distributed database 1, the cache memory 13 is full of a large number of data read/written to make the backup. Thus, the data held in the cache memory 13 before the backup processing is almost lost, and thus the performance of the distributed database 1 temporarily lowers just after the backup processing.

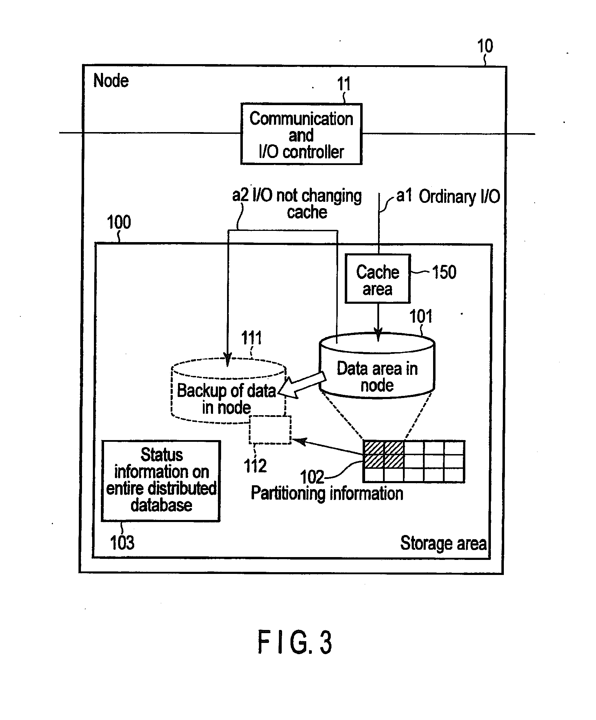

In view of the above, the storage devices of the above embodiment are made to have a mechanism for preventing the performance of the distributed database 1 from lowering due to backup processing. FIG. 3 is a view for explaining a mechanism for preventing lowering of the performance due to the backup processing.

Referring to FIG. 3, a cache area 150 is an area of the storage area 100, which corresponds to the cache memory 13. As described above, the communication and I/O controller 11 includes a specific mode in which it executes data wring/reading on the storage device 12 without changing the contents of data in the cache memory 13. In this specific mode, the communication and I/O controller 11 reads and writes data from and to the storage device 12 to make a backup (a2 in FIG. 3).

By virtue of the above structural feature, the data in the cache memory 13 which is not subjected to the backup processing is maintained, and thus the performance of the distributed database 1 is prevented from temporarily lowering just after the backup processing. It should be noted that the method of handling the cache memory 13 is available not only for the case where a plurality of nodes 10 are provided in the distributed database 1 and their data is backed up, also for the case where a single node 10 is provided and its data is backed up.

Also, in the case where the backups made by the nodes 10 are set as temporary backups, and successively read out, and then stored as accepted backups by, e.g., a magnetic tape, the above method of handling the cache memory 13 can be applied at the time of reading the backups. That is, when receiving a request for reading of a backup, the communication and I/O controller 11 executes reading of the backup in the specific mode.

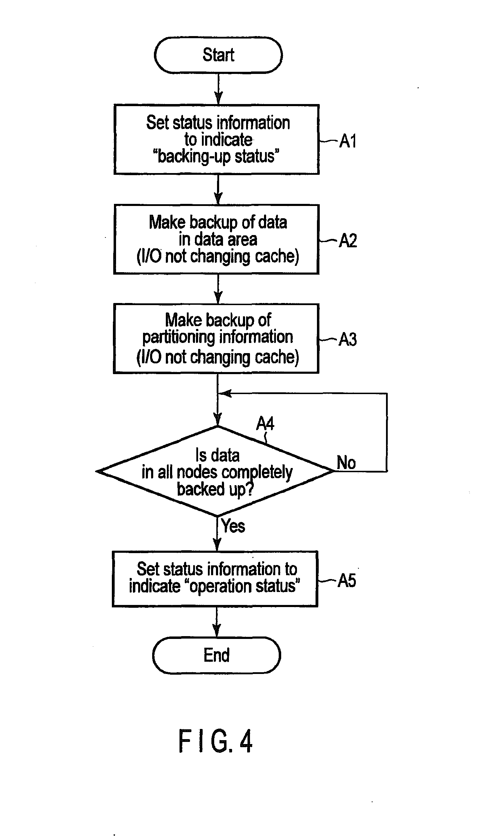

FIG. 4 is a flowchart showing a procedure of the backup processing in the distributed database 1 to communication and I/O controller 11 first determines whether the status information 103 indicates "operation status" or not (block B1). When determining that the status information 103 indicates "operation status" (Yes in block B1), the communication and I/O controller 11 executes writing/reading of data as requested (while using the cache in a regular mode) (block B2).

On the other hand, if the status information 103 indicates "backing-up status" (No in block B1), the communication and I/O controller 11 determines whether the issued request is a request for reading of data or not (block B3). When determining that the request is a request for reading of data (Yes in block B3), the communication and I/O controller 11 executes reading of the data as requested (while using the cache in the regular mode) (block B4). On the other hand, if the above request is a request for writing of data (No in block B3), the communication and I/O controller 11 determines whether the data in the node 10 is completely backed up or not (block B5).

When determining that the data in the node 10 is completely backed up (Yes in block B5), the communication and I/O controller 11 executes writing of the data as requested (while using the cache in the regular mode) (block B6). On the other hand, when determining that the data in the node 10 is not completely backed up (No in block B5), the which the storage devices according to the embodiment are applied as the nodes 10.

In each node 10 in the distributed database 1, the communication and I/O controller 11 first sets the status information 103 such that it indicates "backing-up status" (block A1). If the status information 103 is set to indicate "backing-up status", the communication and I/O controller 11 makes a backup of the data in the data area 101 (in the specific mode in which the cache is not changed) (block A2). At this time, the communication and I/O controller 11 also makes a backup of the partitioning information 102 (in the specific mode in which the cache is not changed (block A3).

The communication and I/O controller 11 determines whether the data in all the nodes 10 in the distributed database 1 is completely backed up or not (block A4). When determining that the data in all the nodes 10 is completely backed up (Yes in block A4), the communication and I/O controller 11 sets the status information 103 such that it indicates "operation status" (block A5).

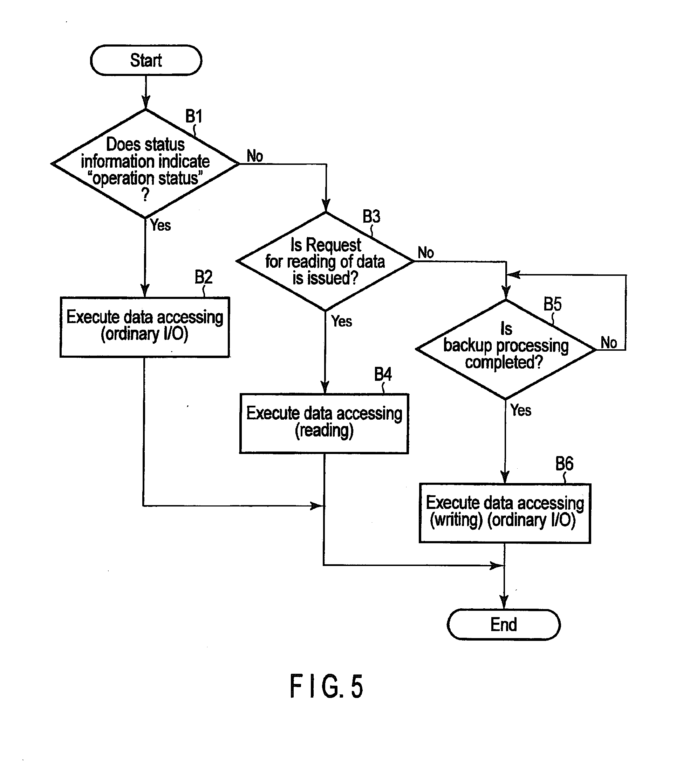

FIG. 5 is a flowchart showing a procedure of data writing/reading in the distributed database 1 to which the storage devices according to the embodiment are applied as the nodes 10.

In each node 10 in the distributed database 1, the communication and I/O controller 11 is on standby until the above data is completely backed up, and it executes wiring of the data as requested after the data in the node 10 is completely backed up.

As explained above, for example, the storage devices according to the embodiment enable a backup of data in the distributed database to be made at a high speed.

It should be noted that all the steps of the backup processing in the embodiment can be carried out by software. Thus, if an ordinary computer is made to incorporate this software through a computer-readable storage medium, it can easily obtain the same advantage as in the embodiment.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A storage device applied to a distributed database, comprising:
a communication module; and
a backup module configured to make backup of partitioning information and data stored for the distributed database in the storage device, when the communication module receives a command to make a backup of the distributed data base, the partitioning information indicating locations of partitions created by separating a storage area of the distributed database.

2. The storage device of Claim 1, further comprising:
a cache memory;
a first data input/output module configured to execute data reading/writing while replacing data in the cache memory; and
a second data input/output module configured to execute data reading/writing without replacing the data in the cache memory,
wherein the backup module is configured to execute making of the backup in the storage device with the second data input/output module.

3. The storage device of Claim 2, further comprising a backup-data processing module configured to execute reading of the partitioning information and the data stored for the distributed database with the second data input/output module, when the communication module receives a command to transmit the backup of the partitioning information and the data stored for the distributed database.

4. The storage device of Claim 1, wherein the backup module is configured to add status information indicating completion of data backup processing to a backup file which stores the partitioning information and the data for the distributed database, after determining that the distributed data base is completely backed up by communication of the communication module.

5. The storage device of Claim 1, further comprising a control module configured
to immediately execute data reading when a request for reading of data is received during data backup processing by the backup module, and
to execute data writing after completion of the backup processing by the backup module when a request for writing of data is received during data backup processing by the backup module.

6. The storage device of Claim 1, wherein the backup module is configured to make the backup by compressing the data for the distributed database.

7. The storage device of Claim 1, further comprising a restoring module configured to restore the partitioning information and the data for the distributed database using the backup made by the backup module.

8. A storage device comprising:
a cache area,
a data storage area,
a first data input/output module configured to execute data writing/reading on the data storage area while replacing data in the cache area;
a second data input/output module configured to execute data writing/reading on the data storage area without replacing data in the cache area; and
a backup module configured to make a copy of data stored in the data storage area in the data storage area with the second data input/output module.

9. The storage device of Claim 7, wherein the backup module is configured to make the copy of the data as compressed data.

10. The storage device of Claim 7, further comprising a restring module configured to restore the data in the data storage area using the copy made by the backup module.

11. A data backup method of a storage device applied to a distributed database, the method comprising:
making backup of partitioning information and data stored for the distributed database in the storage device, when a command to make a backup of the distributed database is received, the partitioning information indicating a locations of partitions created by separating a storage area of the distributed database.

12. The data backup method of Claim 11, wherein the making backup comprises executing making of the backup without changing content of a cache.

13. The data backup method of Claim 11, further comprising adding status information indicating completion of data backup processing to a backup file which stores the partitioning information and the data for the distributed database, after determining that the distributed database is completely backed up.
